# DEMANDE DE BREVET EUROPEEN

(11) **EP 0 933 715 A1**
(43) Date de publication de la demande: **04.08.1999**
(21) Numéro de dépôt: 99400136.0
(22) Date de dépôt: 21.01.1999
(51) Int. Cl.: G06F 17/30, H04L 29/06, G06F 3/14

(54) **Système de téléinformation pour un site d'exploitation de données**

(30) Priorité: 23.01.1998 FR 9800709
(71) Demandeur: SAGEM SA, 75116 Paris (FR)
(72) Inventeur: Barbez, Jean-Michel, 59223 Roncq (FR); Boulet, David, 59130 Lambersart (FR); Courouble, Benoit, 59510 Hem (FR)
(74) Mandataire: Bloch, Gérard

(57) **Abrégé**

Le système de téléinformation destiné à être implanté sur un site d'exploitation de données, comporte :
- un réseau informatique (6) de desserte du site comprenant au moins
   - un terminal (7, 8, 9) de restitution de données et
   - un serveur de réseau (5) auquel le terminal est relié,
- une base de données d'information (1) et
- un serveur de données (2), de sélection de données de la base (1) et de transmission des données sélectionnées au serveur de réseau (5) qui comporte des circuits (23) de notification, au terminal (7, 8, 9), de la disponibilité de données dans le serveur de réseau (5).

## Description

La présente invention concerne les systèmes de téléinformation d'usagers, implantés sur des sites tels que les aéroports, les halls de gare ou d'exposition, voire même en pleine nature, comme par exemple les stations de ski.

Si l'on retient l'exemple du hall de gare, les usagers y reçoivent des informations sonores par des hauts-parleurs et des informations visuelles. Ces dernières sont par exemple fournies par des afficheurs portant des inscriptions et concernent par exemple l'heure courante ou encore l'horaire des trains.

A mesure que les événements, arrivée ou départ de trains, surviennent, la ligne correspondante du panneau d'affichage est effacée et les lignes affichées remontent.

Il existe aussi des afficheurs électriques ou électroniques, tels que des lignes de matrices d'éléments ponctuels ou d'afficheurs "7 segments" permettant de former un caractère ou encore des moniteurs de télévision.

Les hauts-parleurs d'information sonore et les afficheurs sont commandés par un ordinateur à travers une liaison à relativement bas débit, transmettant respectivement des données comprimées de message vocal prédéterminé, restituées par un circuit de décompression au niveau des hauts-parleurs, et des données d'image fixe, rafraîchies cycliquement. Même si l'on peut ainsi annoncer en temps réel un retard de train, on ne peut afficher que des types d'événements prévus et il est exclu de modifier inopinément une séquence d'informations affichées. La seule information "animée" est constituée par les brefs messages vocaux, dont la compression limite le besoin en bande passante, et il est exclu de transmettre des informations graphiques et des images animées, c'est-à-dire vraiment vidéo.

Un tel système manque donc de souplesse, à la fois dans la gestion, évoquée plus haut, des terminaux et dans la diversité des informations fournies. En particulier, il n'offre pas vraiment des fonctions graphiques multimédia.

La présente invention vise à remédier à au moins certains de ces inconvénients.

A cet effet, l'invention concerne un système de téléinformation destiné à être implanté sur un site d'exploitation de données, comportant :
- un réseau informatique de desserte du site comprenant au moins
   - un terminal de restitution de données et
   - un serveur de réseau auquel le terminal est relié,
- une base de données d'information et
- un serveur de données, de sélection de données de la base et de transmission des données sélectionnées au serveur de réseau, caractérisé par le fait que le serveur de données comporte des moyens de notification, au terminal, de la disponibilité de données dans le serveur de réseau.

Ainsi, le terminal peut requérir immédiatement les informations voulues et les afficher en temps réel, constituant ainsi une "image" temps réel du contenu (son, images) du serveur de données. En outre, un affichage graphique ne se heurte à aucune contrainte, tel que goulot d'étranglement, même s'il s'agit de données d'image vidéo et non pas de simples images fixes rafraîchies.

L'invention sera mieux comprise à l'aide de la description suivante d'une forme de réalisation préférée du système de l'invention, en référence au dessin annexé, sur lequel :
- la figure 1 est un schéma par blocs fonctionnels du système de téléinformation de l'invention,
- la figure 2 illustre une page au format HTML, et
- la figure 3 est un schéma par blocs fonctionnels d'un terminal de téléaffichage de la page.

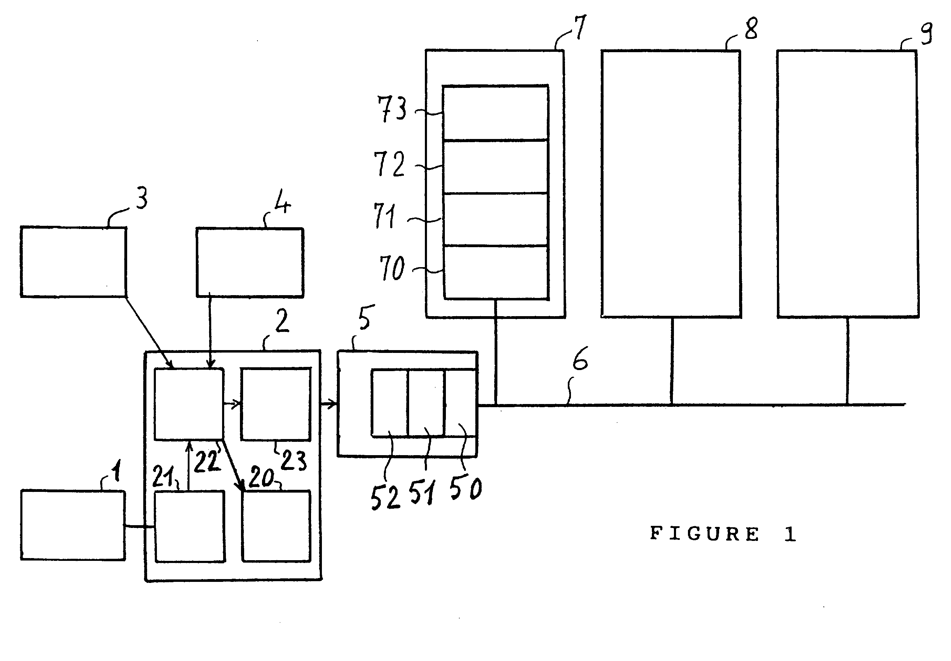

Le système de téléinformation représenté en figure 1 est utilisé ici pour l'information des usagers dans un hall de gare, où les données d'information sont restituées au public pour être exploitées par celui-ci.

Il comporte une base de données 1, contenant l'horaire des trains pour une saison, reliée à un serveur 2 de données d'information, ici un PC, avec base de temps, qui en extrait les données pertinentes pour les heures qui suivent l'heure courante. Dans cet exemple, il est prévu un système 3 de suivi temps réel des mouvements de trains, relié directement au serveur 2, qui saisit et fournit à celui-ci des données de modification, ou mise à jour, des données provenant de la base de données 1, en particulier module l'horaire prévisionnel en fonction des décalages temporels constatés dans ces mouvements de trains pour fournir un horaire réel. De façon similaire, un pupitre d'exploitation 4, relié directement au serveur 2, permet à un exploitant de mettre à jour la base de données 1 (ou simplement le serveur 2 pour le court terme) pour, par exemple, annoncer des trains supplémentaires, ou des suppressions de trains, ou charger un nouvel horaire.

Outre un microprocesseur 20, le serveur de données d'information 2 comporte une mémoire 21 de blocs de données représentant les données émises et donc restituées par chaque terminal 7 à 9 et des données associées d'identité du terminal 7 à 9 considéré, mémoire 21 alimentée depuis la base de données 1, des circuits de comparaison 22 reliés en entrée, d'un côté, à la mémoire 21 et, de l'autre, au pupitre 4 ainsi qu'à la liaison avec le système de suivi 3 et reliés en sortie au microprocesseur 20 et à un circuit 23 de notification, aux terminaux 7 à 9, de la disponibilité de données dans le serveur de réseau 5.

Dans un exemple à un seul terminal, une telle mémorisation ne serait pas nécessaire puisque le serveur 2, connaissant les types d'informations qui sont restituées, pourrait donc déterminer si un événement (3, 4) les remet ou non en cause.

La description ci-dessus n'est que fonctionnelle et les diverses fonctions sont en fait ici réalisées en partage de temps dans le microprocesseur 20.

Le serveur de données 2 alimente en telles données, multimédia, un serveur 5 de réseau informatique, relié, par un réseau informatique 6, à au moins un terminal comme celui référencé 7, de restitution des données d'information. Il est ici dessiné trois tels terminaux, 7, 8, 9, les terminaux 7 et 8 étant ici à base de moniteurs vidéo (73), avec des circuits (70) de raccordement au réseau 6, reliés à des circuits logiques d'interface réseau (71) eux-mêmes reliés à des circuits logiques d'interface serveur (72), et le terminal 9 comportant un haut-parleur, associé à des circuits de raccordement et des circuits logiques d'interface telles qu'indiqués ci-dessus. Les terminaux 7 à 9 sont ici du type Calculateur de Réseau (Network Computer) c'est-à-dire que leur logiciel est téléchargé à la mise sous tension depuis le serveur 5.

Une régie (non représentée) de composition d'images ou d'informations multimédias reliée au serveur 5, ici en fait intégrée au serveur 2, permet en outre à un opérateur d'engendrer des images, ceci à partir d'un scanner couleur et en utilisant des logiciels classiques de traitement d'image. Une carte d'acquisition vidéo permet de même de retransmettre des images vidéo aux terminaux 7 et 8 après numérisation ici au format MJPEG. Les images ainsi reçues ou engendrées viennent compléter en temps réel celles sélectionnées dans la base de données 1.

Le réseau informatique 6 est ici de taille limitée et se présente sous forme d'un réseau local, filaire, et plus précisément du type de la marque protégée ETHERNET, équivalent de la norme IEEE 802-3.

Le serveur de réseau 5 est ici un serveur du type de l'INTERNET, c'est-à-dire que le réseau ETHERNET 6 sert à une exploitation de type INTERNET sur réseau local, que l'on appelle alors INTRANET. Le serveur de réseau 5 est agencé pour tenir à disposition des terminaux 7 et 8 des pages au format HTML, reçues déjà préparées du serveur 2 ou qu'il prépare lui-même d'après les données reçues, et pour fournir au terminal 9 des données d'information vocale. Le terminal 9 aurait pu être intégré dans le terminal 7 ou 8.

Le réseau 6 étant du type INTRANET, les échanges de données à travers le réseau ETHERNET 6 s'effectuent selon le protocole TCP/IP et sont gérés par des circuits 52 et 72 décrits plus loin.

Le serveur de réseau 5 comporte des circuits de raccordement 50 au réseau 6, reliés à des circuits logiques 51 d'interface réseau ETHERNET eux-mêmes reliés à des circuits logiques 52 d'interface terminaux.

L'exploitation du système de téléinformation ci-dessus va maintenant être expliquée plus avant.

Les terminaux 7 à 9 de téléinformation sont implantés dans le hall de gare, tandis que les autres éléments 1 à 5 du système peuvent être à distance de ceux-ci et même éventuellement mutuellement distants. En d'autres termes, on aurait pu n'avoir un réseau local qu'au niveau des terminaux 7 à 9, téléalimenté par le serveur de réseau 5 à travers une liaison haut débit, les éléments 1, 2, 4 et 5 pouvant être éventuellement implantés dans un site central desservant plusieurs gares. Il n'est de même nullement exclu techniquement d'utiliser l'INTERNET en remplacement de l'INTRANET 6.

En fonction de la date et de l'heure courante et des nature et position des terminaux 7 à 9 dans le hall, le serveur de données 2 lit la partie pertinente de la base de données 1 pour constituer des messages de données d'information à afficher, respectivement diffusés de façon sonore, par les terminaux 7, 8 et 9.

Les messages sonores, intercalés dans une musique de fond, sont par exemple des annonces de départ ou d'arrivée de train, dont l'instant d'émission est défini par comparaison entre l'instant actuel et l'horaire. Le système 3 de suivi des mouvements de trains peut de même provoquer une annonce vocale (synthèse vocale) de modification d'horaire et un opérateur peut faire de même depuis le pupitre 4, pour par exemple rechercher une personne. L'annonce vocale est transmise après traversée d'un circuit de compression de la parole s'il s'agit de l'opérateur.

Comme, dans cet exemple, le serveur 5 ne transmet pas spontanément aux terminaux 7 à 9 les données provenant du serveur de données 2, ce dernier transmet aussi au terminal 9 des données de notification de mise à disposition de données vocales qui lui sont destinées, lui indiquant qu'il doit appeler le serveur de réseau 5 pour le consulter et les y retirer.

En variante, il aurait pu être prévu des consultations cycliques et automatiques du serveur de réseau 5 par les terminaux 7 à 9.

Cette notification peut être transmise, du serveur de données 2 au terminal 9, par une liaison traversant éventuellement le serveur de réseau 5, comportant alors des circuits spécifiques (du genre de ceux des terminaux 7 à 9) pour appeler à cet effet le terminal 9. La liaison ci-dessus de notification peut au contraire être directe, c'est-à-dire sans traverser le serveur de réseau 5. Dans un cas comme dans l'autre, elle peut être indépendante du réseau 6 mais, de préférence, elle emprunte celui-ci, auquel cas on peut prévoir de raccorder directement le serveur de données 2 au réseau ETHERNET 6.

Avant d'expliquer la gestion des pages à afficher, on va préciser l'architecture matérielle et logicielle du système de téléinformation en ce qui concerne les transmissions de données.

Le système de téléinformation comporte des circuits d'interface pour la transmission de signaux électriques représentant les données, d'information et de service, des circuits (matériel et logiciel) de gestion des circuits d'interface, pour établir en particulier des liaisons physiques temporaires à travers le réseau ETHERNET 6, et des circuits (matériel et logiciel) de gestion logique des échanges de données, une fois que la liaison physique a été établie.

Si l'on fait référence aux couches normalisées 1 à 7 de la normalisation OSI (Interconnexion des Systèmes Ouverts), les circuits d'interface de raccordement 50 et 70 correspondent à la couche inférieure 1, définissant les spécifications physiques, telles que niveau de tension et impédance, des circuits de raccordement au réseau ETHERNET 6, réseau à base d'un ou plusieurs tronçons de câble coaxial, de paire torsadée ou de fibre optique.

Les circuits 51 et 71 traitent les couches OSI 2 ET 3. La couche 2 définit la façon d'adapter le débit des bits transmis, ainsi que la signification des divers bits de trame, si tel est le cas. La couche 3, alimentée en données par la couche 2 et l'alimentant en retour, définit les messages à échanger entre les circuits 51 et 71 pour établir une liaison physique temporaire entre le serveur de réseau 5 et le terminal 7.

Une fois la liaison physique établie, le réseau ETHERNET 6 est transparent, c'est-à-dire qu'il transmet, sans les interpréter, les données échangées de liaison logique entre les circuits 52 et 72. Ce sont ces derniers, traitant les couches OSI supérieures 4 à 7, qui gèrent l'application concernée. Ici, les circuits 52 et 72 traitent en particulier la présentation des données au niveau du destinataire, c'est-à-dire, d'une part, la présentation des données reçues par le terminal 7, afin qu'elles soient affichées au format prévu, et, d'autre part, la présentation des requêtes de données, au serveur de réseau 5, par le terminal 7.

La transmission de données d'information, cette fois-ci visuelles, entre le serveur de données 2 et les terminaux 7 et 8 va maintenant être précisée.

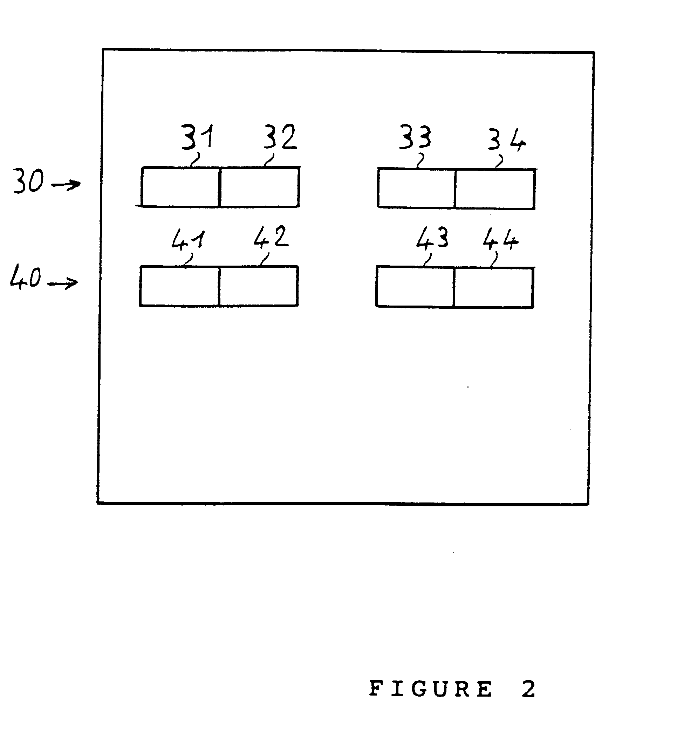

Le serveur de réseau 5 tient à disposition des terminaux 7 et 8 des pages au format HTML (fig. 2), comportant diverses zones d'information, par exemple des bandes horizontales 30, 40, ou des segments 31, 32, 33, 34 et 41, 42 43, 44 d'affichage d'une ligne de caractères.

Dans l'exemple dessiné d'une segmentation des lignes, chaque zone de segment comme 31 permet d'afficher une information unique, telle que référence du train, heure de départ ou d'arrivée, retard ou avance, gare desservie et autres.

C'est le serveur de données 2 qui élabore les pages du serveur de réseau 5, par sélection de données de la base de données 1 et, le cas échéant, des informations (3, 4) traduisant des événements imprévus.

Le serveur de données 2 a en mémoire, comme évoqué, des données spécifiques d'identité, de nature (sonore et/ou visuelle) et de localisation ou position des terminaux 7, 8 et 9 et élabore pour chacun, d'après ces données spécifiques, les pages HTML à émettre vers les terminaux 7 et 8, par exemple les heures de départ de trains sur l'un d'eux et celles d'arrivée sur l'autre. Chaque page émise est mémorisée temporairement dans la mémoire 21 en association avec les données d'identité du terminal 7 ou 8 concerné. En particulier, il est mémorisé chaque information de la page et la position de la zone (31) qu'elle occupe.

En cas de survenance d'événement, les circuits de comparaison 22, ainsi commandés par le système de suivi 3 et/ou le pupitre 4, comparent l'événement, après une éventuelle mise à la forme voulue des données correspondantes, au contenu de la mémoire 21, pour y rechercher une ou plusieurs pages affectées par cet événement, créant une discordance, c'est-à-dire comparent les informations de mise à jour aux données restituées, en mémoire 21. Il s'agit de pages dont au moins une zone contient une information déduite, directement ou indirectement, de données de la base de données 1 devenues fausses ou obsolètes par l'arrivée de cet événement.

Afin de faciliter le repérage des informations à modifier en mémoire 21, il est affecté à chaque type d'information un ou des attributs désignant le ou les types d'informations primaires, ou mères, dont elles découlent. Ainsi un retard de train dépend de l'horaire, et de ses modifications éventuelles, et des informations provenant du système de suivi des trains 3. Par contre, un nom de gare desservie est indépendant de tout événement lié au temps.

Tout élément modifiant les informations mères entraîne donc, au niveau des circuits de comparaison 22, le repérage des informations filles ayant, en attribut, ce genre d'informations mères.

Les circuits de comparaison 22 pointent alors les diverses pages affectées et commandent le circuit de notification 23 pour avertir le ou les terminaux 7 et 8 affectés. En parallèle, le serveur 2 détermine (20) de nouvelles zones (31) corrigées, remplaçant celles qui ont été repérées.

Il est ici prévu que le terminal 7 (et 8) affiche en alternance plusieurs pages d'une série, chacune émise à chaque fois par le serveur de données 2 ou simplement lues dans le serveur de réseau 5 qui les a en mémoire. En variante, chaque page est mémorisée dans le terminal 7 ou 8, ayant reçu du serveur de données 2 une commande de chaînage d'affichages de pages, et le terminal 7 ou 8 exécute lui-même le séquencement voulu des affichages, à un rythme fixé par le serveur 2 et mémorisé localement.

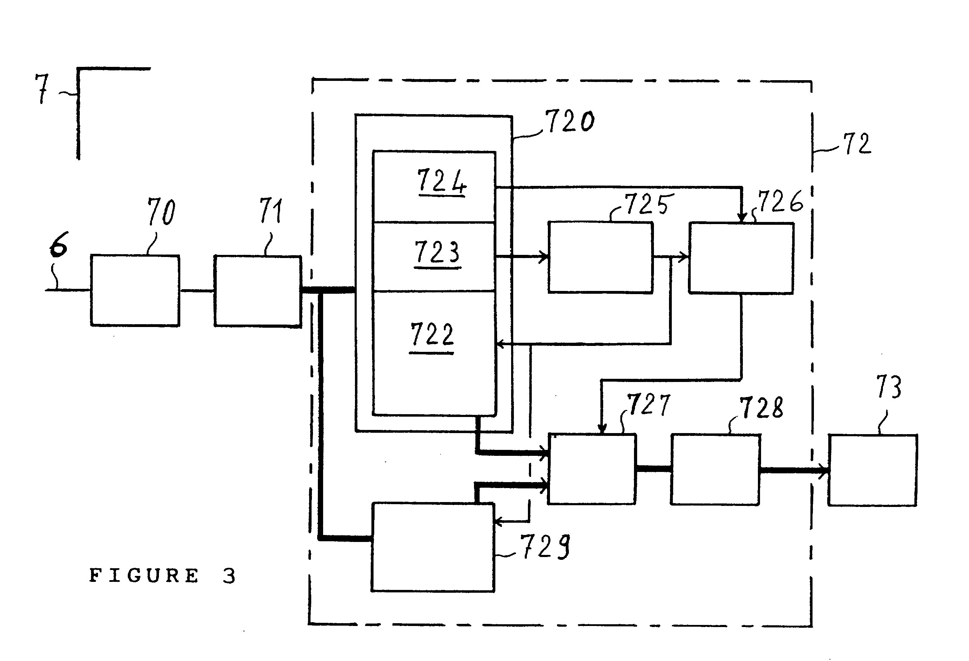

Le serveur de données 2 commande ainsi des cycles d'affichages successifs d'une série d'images sur le terminal 7, 8 considéré. Dans la variante ci-dessus, le terminal 7, 8 comporte une mémoire RAM 720 (fig. 3), détaillée plus loin, mémorisant (bloc 722) la série d'images et des commandes associées d'affichage cyclique dans un bloc 723 relié à un circuit séquenceur 725 qu'il commande pour balayer cycliquement en lecture le bloc d'images 722 et ainsi transmettre cycliquement la série d'images au moniteur 73.

Dans cet exemple, le serveur de données 2 fournit simplement, au serveur de réseau 5, des données représentant la ou les zones (31) de correction, ainsi que leur position dans la page HTML.

Le terminal 7 (ou 8) concerné, dont le circuit 72 a reçu et interprété la notification (supposée ici transmise par le réseau 6), appelle le serveur de réseau 5 par commande, depuis le circuit 72, des circuits 71 et 70 permettant de l'appeler pour consultation, en reçoit les données représentant la ou les zones (31) de correction et leur position (ou identité). Les circuits 72 assurent alors, par la couche OSI Présentation qu'il gèrent, la substitution de la ou des zones à remplacer par celle(s) de remplacement, par repérage, ou identification, d'après les données de position de celle(s)-ci dans la page.

La page est affichée sur le moniteur vidéo 73, ici à balayage ligne, alimenté par lecture séquentielle du bloc 722. Afin de lire dans le bloc 722 non pas les données de la ou des zones 31 de page devenues obsolètes mais la ou les zones 31 de remplacement, stockées dans un tampon 729 associé au bloc 722 (ou dans celui-ci), les circuits 72 comportent un circuit comparateur 726. Celui-ci est relié, en entrée, à la sortie du séquenceur 725 commandant le balayage en lecture du bloc 722, de la page considérée, et à un bloc 724 de la mémoire 720, qui contient les données indiquant la position de chaque zone (31) pour laquelle il convient de lire les données d'information mises à jour associées, contenues dans le tampon 729. Le contenu du bloc 724 et du tampon 729 forme des données différentielles d'information représentant la zone (31) corrigée associée à la position de celle-ci dans la page.

Lorsque le séquenceur 725 de lecture du bloc 722 adresse, dans celui-ci, une position de pixel à afficher qui est incluse dans une zone (31) à mettre à jour, le circuit comparateur 726 commande alors un multiplexeur 727 à deux voies d'entrée, ou aiguilleur, alimentant en données d'information un convertisseur numérique/analogique vidéo 728 commandant le moniteur 73. Le multiplexeur 727 commute alors, d'une voie d'entrée sur l'autre, pour lire la zone de substitution (31), ou mise à jour, dans le tampon 729, au lieu de la zone (31) homologue devenue obsolète du bloc 722.

On évite ainsi un réaffichage total de la page, susceptible de produire, d'une image à l'autre, une transition lumineuse sur tout l'écran 73, désagréable à l'oeil.

La partie de description qui précède porte sur des images fixes sous forme de pages au standard HTML. La présente invention n'est pas limitée à des images de pages ni même à des images fixes, et elle s'étend à tout type d'image. Compte tenu de la bande passante offerte par le réseau 6, qui peut atteindre 100 Mb/s dans cet exemple, il peut être transmis aux terminaux 7, 8 des fichiers de données d'images animées, issues d'une caméra (temps réel) ou d'une cassette.

Il peut être en outre prévu de diffuser les informations du serveur de données 2 au-delà du site, ici hall de gare, concerné. Il a déjà été évoqué plus haut une diffusion à travers l'INTERNET ou tout réseau équivalent de transmission de données. On peut de même envisager une diffusion radio, en plus ou même à la place du réseau filaire 6 (terminaux 7 à 9 à liaison radio), c'est-à-dire que ce dernier comporte (ou a accès à) un émetteur-récepteur de liaison radio avec des équipements distants et par exemple mobiles, et même portatifs, de radio messagerie ou de radio téléphonie comme par exemple pour le réseau GSM.

Dans ce dernier exemple, un terminal téléphonique mobile et portatif du réseau GSM, prévu pour la transmission radio de données, permet ainsi la consultation, à distance du site concerné, d'un serveur de réseau fonctionnellement semblable au serveur 5. Un utilisateur peut ainsi par exemple déterminer facilement, par lecture d'un écran, par exemple à cristaux liquides LCD, ou simplement par un écouteur, qu'il va probablement arriver trop tard pour prendre un train ou un avion et il peut alors immédiatement téléphoner pour réserver, vocalement ou par transmission de données, une place pour un autre départ. Un clavier de relations homme-machine du terminal portatif permet à l'utilisateur d'appeler le serveur de réseau (5) par commande d'un circuit d'appel et de commande du serveur. Le circuit d'appel et de commande, du genre des circuits 71 et 72, permet d'établir, à travers un émetteur-récepteur radio classique de terminal GSM, une connexion radio avec le serveur de réseau 5 pour le consulter et le commander en transmettant à celui-ci les commandes, dans un format prédéterminé, pour effectuer par exemple une réservation.

On conçoit qu'il pourrait de même être prévu que les terminaux fixes 7 et 8 du site concerné soient interactifs, c'est-à-dire permettent, par des moyens de relations homme-machine tels que clavier ou microphone avec reconnaissance vocale, de consulter le serveur de réseau 5 et, à travers lui, le serveur de données 2 pour accéder à la base de données 1 et par exemple consulter l'horaire pour le moyen ou long terme.

Dans le cadre du terminal interactif ci-dessus ou des terminaux de simple restitution d'informations (7 à 9), il peut être prévu de recopier sur le terminal des informations restituées par un ou plusieurs autres. Ainsi, et si l'on prend l'exemple d'un site étendu comme une station de ski, un terminal à moniteur vidéo, tout en bas des pistes, peut afficher en alternance, ou simultanément à échelle réduite, les images d'autres moniteurs vidéo situés en bas de pistes intermédiaires et indiquant si la piste considérée est ouverte ou fermée. Les skieurs peuvent ainsi, à leur arrivée en bas du domaine skiable, s'orienter vers une zone comportant une majorité de pistes ouvertes.

Même l'affichage limité à un seul autre terminal présente un intérêt, pour, selon le cas, s'orienter vers une piste autre que celle qu'il contrôle ou au contraire y accéder.

Le terminal de recopie peut à cet effet s'adresser au serveur 5 et composer localement une image composite ou une séquence d'images des autres terminaux, images de synthèse de la situation. Il peut encore se présenter sous la forme du terminal 7, et être alimenté en données d'information à partir du serveur 2, qui effectue lui-même, spontanément ou sur demande du terminal, l'émission et la composition d'image à partir des données de la mémoire 21.

## Revendications

1. Système de téléinformation destiné à être implanté sur un site d'exploitation de données, comportant :
- un réseau informatique (6) de desserte du site comprenant au moins
- un terminal (7, 8, 9) de restitution de données et
- un serveur de réseau (5) auquel le terminal est relié,
- une base de données d'information (1) et
- un serveur de données (2), de sélection de données de la base (1) et de transmission des données sélectionnées au serveur de réseau (5), caractérisé par le fait que le serveur de données (2) comporte des moyens (23) de notification, au terminal (7, 8, 9), de la disponibilité de données dans le serveur de réseau (5).

2. Système selon la revendication 1, dans lequel il est prévu des moyens (3, 4) de saisie de données de mise à jour reliés directement au serveur de données (2).

3. Système selon l'une des revendications 1 et 2, dans lequel les moyens de notification (23) commandent une liaison de notification reliant le serveur de données (2) au terminal (7, 8, 9).

4. Système selon la revendication 3, dans lequel la liaison de notification traverse le serveur de réseau (5).

5. Système selon l'une des revendications 3 et 4, dans lequel la liaison de notification traverse le réseau (6).

6. Système selon l'une des revendications 1 à 5, comportant une pluralité de terminaux (7, 8, 9) et dans lequel le serveur de données (2) comporte des moyens mémoires (21) agencés pour mémoriser, pour chacun des terminaux (7, 8, 9), un bloc de données représentant les données restituées par celui-ci et des données d'identité associées et des moyens comparateurs (22) pour comparer les données de mise à jour aux données des moyens mémoires (21) et pour commander les moyens de notification (23) en cas de discordance.

7. Système selon l'une des revendications 1 à 6, dans lequel le réseau (6) est du type INTRANET et le serveur de réseau (5) est agencé pour fournir des pages de données d'information au format HTML.

8. Système selon l'une des revendications 2 à 7, dans lequel le serveur de données (2) est agencé pour composer des pages de données d'information, pour repérer les positions de zones des diverses données d'information dans la page, et pour, sous la commande des moyens (3, 4) de saisie de données de mise à jour, déterminer au moins une zone à mettre à jour et y substituer une zone correspondante de page corrigée.

9. Système selon la revendication 8, dans lequel le serveur de données (2) est agencé pour mettre à jour l'affichage d'un écran du terminal (73) par transmission à celui-ci de données différentielles d'information, représentant la zone corrigée associée à la position de celle-ci dans la page.

10. Système selon l'une des revendications 1 à 9, dans lequel le terminal (7, 8) comporte des moyens mémoires (722, 723) pour mémoriser une série d'images et des commandes associées d'affichage cyclique, reliés à des moyens séquenceurs (725) de transmission cyclique, à un afficheur (73), de ladite série d'images.

11. Système selon l'une des revendications 1 à 10, dans lequel le terminal (7, 8, 9) est un terminal téléphonique mobile relié au réseau informatique (6) par radio.
